# EUROPEAN PATENT SPECIFICATION

(11) **EP 3 530 619 B1**
(45) Date of publication and mention of the grant of the patent: **08.04.2026**
(21) Application number: 17862912.7
(22) Date of filing: 11.10.2017
(51) Int. Cl.: C01B 32/336, C01B 32/30, C01B 32/318, C01B 32/354, C01B 32/378

(54) **CARBONACEOUS MATERIAL AND METHOD FOR PRODUCING SAME**
KOHLENSTOFFHALTIGES MATERIAL UND VERFAHREN ZUR HERSTELLUNG DAVON
MATÉRIAU CARBONÉ ET SON PROCÉDÉ DE PRODUCTION

(30) Priority: 21.10.2016 JP 2016206908
(43) Date of publication of application: 28.08.2019
(73) Proprietor: Kuraray Co., Ltd., Okayama 710-0801 (JP)
(72) Inventor: KOBAYASHI, Shohei, Kurashiki-shi Okayama 710-0801 (JP); MATSUSHIMA, Motomi, Kurashiki-shi Okayama 710-0801 (JP); KIMACHI, Seiya, Kurashiki-shi Okayama 710-0801 (JP); IWASAKI, Hideharu, Kurashiki-shi Okayama 710-0801 (JP)
(74) Representative: Müller-Boré & Partner Patentanwälte PartG mbB
(86) International application number: PCT/JP2017/036829
(87) International publication number: WO 2018/074303

(56) References cited:
- JP-A- 2006 179 558
- JP-A- 2012 179 589
- JP-A- 2013 518 018
- JP-A- 2014 165 435
- JP-A- 2016 150 895
- US-A1- 2012 177 923
- US-A1- 2013 211 158
- US-B2- 9 412 484

## Description

The present invention relates to an activated carbon and a method for producing the activated carbon. More specifically, the present invention relates to an activated carbon having a large specific surface area and reduced in the content of hydrogen and the amount of a surface functional group, and a method for producing the activated carbon.

Conventionally, activated carbon has been produced using palm shell, wood chips, charcoal, peat or coal (e.g., lignite, brown coal, bituminous coal, anthracite) as the main raw material and by subjecting the raw material to a carbonization treatment, an activation treatment and the like. In a liquid phase, activated carbon has been used in use applications including an advanced water purification treatment, the removal of trihalomethane, the clarification of sewage, the cleanup of groundwater and a water purifier. In a gas phase, activated carbon has been used in use applications including the purification of industrial fume, the removal of mercury, the removal of a waste disposal gas, and the removal of sulfur oxide or nitrogen oxide from a combustion gas, and is also used in wide varieties of use applications including the recovery of a solvent, the recovery of a process gas, the separation and purification of nitrogen, the decoloration of a medicine or a food, a catalyst, a catalyst carrier, and a carbon material for a an electric double-layer capacitor or a lithium ion capacitor.

In recent years, it has been attempted to use activated carbon as an electrode material for a lithium sulfur battery or an organic radical battery which is expected as a next-generation lithium ion battery, and is added to an electrode material having significantly poor electrical conductivity as an additive for imparting electrical conductivity.

The performance and its level to be required for the above-mentioned activated carbon that has been used in wide varieties of use applications vary depending on the intended use. For example, when it is intended to use the activated carbon for adsorption purposes, the activated carbon is required to have uniform pore diameters and a specific surface area as high as 500 to 3000 m²/g. When it is intended to use the activated carbon as an electric double-layer capacitor or a lithium ion capacitor that serves as an electric energy storage device, the activated carbon is required to have a large specific surface area of larger than 1000 m²/g and to be chemically and electrochemically inert, for the purpose of charging/discharging electrolyte ions by means of surface adsorption/desorption or, when used as an electrically conductive additive, for the purpose of increasing the contact surface with an electrode material to improve current collection efficiency.

Accordingly, in order to produce an electrode for capacitors which has high durability, it is effective to reduce the amount of surface functional groups contained in activated carbon used as an electrode material or the amount of crystal terminals, i.e., structure-terminal hydrogen atoms in the activated carbon, which is capable of reacting with an electrolytic solution, thereby preventing the decomposition of the electrolytic solution. As the method for reducing the amount of surface functional groups in activated carbon, a method has been proposed, in which the activated carbon is heat-treated in an inert gas atmosphere to decompose, eliminate the functional groups (e.g., Patent Documents 1 to 5).

Meanwhile, as the method for reducing the amount of structure-terminal hydrogen atoms, a method has been proposed, in which the activated carbon is plasma-treated in the presence of a fluorocarbon gas (e.g., Patent Documents 6 and 7). Patent Document 8 describes low ash activated carbon materials, and methods for making the same. Patent Document 9 describes capacitors, and specifically carbon materials that can be used in capacitors. Patent Document 10 describes activated carbon materials and methods of producing and using activated carbon materials.
Patent Document 1: JP 2003-209029 A
Patent Document 2: JP 2002-249307 A
Patent Document 3: JP 2002-362912 A
Patent Document 4: JP 2000-299259 A
Patent Document 5: JP 2006-24747 A
Patent Document 6: JP 2010-45414 A
Patent Document 7: WO 2005/069321 A1
Patent Document 8: US 2012/177923 A1
Patent Document 9: US 9 412 484 B2
Patent Document 10: US 2013/211158 A1

All of the methods disclosed in Patent Documents 1 to 5 include a step of subjecting activated carbon that has been activation-treated to a heat treatment. However, the heat treatment employed in the aforementioned methods, which is carried out under a relatively high temperature, may readily cause the decrease in the specific surface area or pore area of the activated carbon. Therefore, in an electrode material for capacitors which utilizes such the activated carbon, the initial electrostatic capacitance tends to become low. For these reasons, a method has been demanded which can reduce the amount of surface functional groups effectively without the need to increase a heating treatment temperature or prolong a treatment time.

In the methods disclosed in Patent Documents 6 and 7, it is necessary to use a fluorocarbon gas that may adversely affect human bodies. It is also needed to use a special treatment device for the treatment of hydrogen fluoride that is generated as the result of this treatment. Furthermore, it is also needed to use a device for generating special plasma, and the device requires a high electric power. Therefore, the methods are economically disadvantageous.

An object of the present invention is to provide an activated carbon which has a large specific surface area, is reduced in the amount of electrochemically unstable surface functional groups (e.g., oxygen functional groups) and structure-terminal hydrogen atoms, and has low resistance. Another object of the present invention is to provide a production method whereby it becomes possible to produce the activated carbon safely, economically and easily.

The present inventors have made intensive and extensive studies in order to solve the above-mentioned problem. As a result, the present invention has been achieved. The present invention includes the following preferred aspects.
[1] An activated carbon which is derived from a plant, the activated carbon having a specific surface area of 1000 to 1800 m²/g as measured by a BET method, a hydrogen element content of 0.25% by mass or less and an oxygen element content of 1.5% by mass or less.
[2] The activated carbon according to [1], wherein a potassium element content is 500 ppm or less.
[3] The activated carbon according to [1] or [2], wherein an iron element content is 200 ppm or less.
[4] A method for producing an activated carbon according to any one of [1] to [3], the method comprising:
   a step of attaching an alkali metal hydroxide onto plant-derived activated carbon having an average particle diameter of 100 to 10000 µm and a specific surface area of 900 to 2000 m²/g as measured by a BET method; and
   a gas-phase demineralizing step of heat-treating alkali-metal-hydroxide-attached activated carbon produced in the precedent step at 500 to 1250°C in an inert gas atmosphere containing a halogen compound to obtain the activated carbon.

According to the present invention, an activated carbon which has a large specific surface area, is reduced in the amount of electrochemically unstable oxygen functional groups and structure-terminal hydrogen atoms, and has low resistance, and a method for producing the activated carbon can be provided.

Hereinbelow, the embodiments of the present invention will be described in detail. The scope of the present invention is not limited to the embodiments mentioned in this section, and various changes and variations will be possible without departing from the spirit of the invention.

The activated carbon according to the present invention is a plant-derived activated carbon, and has a specific surface area of 1000 to 1800 m²/g as measured by a BET method and also has a hydrogen element content of 0.25% by mass or less and an oxygen element content of 1.5% by mass or less.

### [BET specific surface area]

The specific surface area as measured by a BET method (also referred to as a "BET specific surface area") of the activated carbon according to the present invention is 1000 m²/g or more, preferably 1200 m²/g or more, more preferably 1300 m²/g or more, still more preferably 1400 m²/g or more, and is 1800 m²/g or less, preferably 1700 m²/g or less. If the BET specific surface area is more than 1800 m²/g, although an electrolyte adsorption amount per weight may increase, the capacitance per volume may decrease and therefore it tends to be difficult to secure a high initial electrostatic capacitance. If the BET specific surface area is less than 1000 m²/g, the area for the reaction with an electrolytic solution may decrease and therefore input/output properties may be deteriorated.

In the present invention, the BET specific surface area can be calculated by a nitrogen adsorption method, and can be calculated by, for example, the method described in the section "EXAMPLES".

### [Average particle diameter]

The average particle diameter (Dv50) of the activated carbon according to the present invention may be adjusted appropriately depending on the intended use or the like. In the case where the activated carbon is used as an electrode material, a conductive material or the like in various battery devices, the average particle diameter is preferably 2 to 30 µm. When the average particle diameter is 2 µm or more, the thickening of a paste during the production of an electrode, which is caused by the increase in the amount of fine powdery materials, can be prevented, and therefore the deterioration in the efficiency of the production of the electrode can be prevented. The activated carbon can be used preferably for the production of an electrode, because voids each having a sufficient volume can be formed in the activated carbon and therefore the migration of an electrolyte in an electrolytic solution in the activated carbon is less likely to be prevented. The average particle diameter of the activated carbon is preferably 2 µm or more, more preferably 2.1 µm or more, still more preferably 2.5 µm or more, especially preferably 3 µm or more. When the average particle diameter of the activated carbon is 30 µm or less, it becomes possible to achieve a high electrostatic capacitance and rapid charging and discharging. This is because the surface areas of the particles contribute to the capacitance of the electrode. In an electric double-layer capacitor, it is critical to increase the area of an electrode for the improvement of input/output properties. Therefore, it is preferred to decrease the coating thickness of an active material onto a current collector plate during the preparation of an electrode, and the coating thickness can be decreased by decreasing the particle diameters of the active material. From these viewpoints, the upper limit of the average particle diameter is preferably 30 µm or less, more preferably 19 µm or less, still more preferably 17 µm or less, especially preferably 16 µm or less, most preferably 15 µm or less.

### [Raman spectra]

It is preferred for the activated carbon according to the present invention to have an intensity ratio (R value = I_{D}/I_{G}) of 1.2 or more in Raman spectra observed by laser Raman spectroscopy, wherein the intensity ratio is a ratio of the intensity (I_{D}) of a peak appearing around 1360 cm⁻¹ to the intensity (I_{G}) of a peak appearing around 1580 cm⁻¹. In this regard, the peak appearing around 1360 cm⁻¹ is a Raman peak generally referred to as "D band" and is associated with the disturbance or defect of a graphite structure, and the peak appearing around 1580 cm⁻¹ is a Raman peak generally referred to as "G band" and comes from a graphite structure. The peak appearing around 1360 cm⁻¹ is generally observed at the range of 1345 to 1375 cm⁻¹, preferably 1350 to 1370 cm⁻¹. The peak appearing around 1580 cm⁻¹ is generally observed at the range of 1565 to 1615 cm⁻¹, preferably 1560 to 1610 cm⁻¹.

The R value, which is the ratio between the intensities of the peaks, is involved in the crystallinity of the activated carbon. If the crystallinity of the activated carbon is too high, the number of carbon edges may decrease due to the development of the graphite structure and therefore the number of electrolyte coordination sites may also decrease. As a result, the properties at a lower temperature may be deteriorated, leading to the occurrence of such a problem that resistance increases. If the crystallinity of the activated carbon is too poor, amorphous areas increases and therefore electric resistance tends to increase. As a result, the utilization efficiency of an electric double layer on the interface between an electrolyte and an electrode material may decrease. From these viewpoints, the R value is preferably 1.2 or more, more preferably 1.21 or more. From the viewpoint of the affinity for an electrolytic solution, the R value is preferably 1.4 or less.

### [Metal element]

Examples of the metal element to be contained in the activated carbon according to the present invention include an alkali metal (e.g., sodium), an alkaline earth metal (e.g., magnesium, calcium) and a transition metal (e.g., iron, copper) .

In one embodiment of the present invention, the content of sodium element in the activated carbon is preferably 1000 ppm or less, more preferably 500 ppm or less, still more preferably 300 ppm or less, especially preferably 100 ppm or less, infinitely preferably 50 ppm or less. The content of potassium element in the activated carbon according to the present invention is preferably 500 ppm or less, more preferably 300 ppm or less, still more preferably 100 ppm or less, especially preferably 50 ppm or less. The content of iron element in the activated carbon according to the present invention is preferably 200 ppm or less, more preferably 150 ppm or less, still more preferably 100 ppm or less, especially preferably 60 ppm or less, infinitely preferably 40 ppm or less. The content of each of sodium element, potassium element and iron element in the activated carbon is generally 0 ppm or more. When the contents of the metal elements in the activated carbon are respectively equal to or lower than the above-mentioned upper limits, it becomes possible to reduce the influence of the metal elements on the electrochemical properties and safety of an electrode material when the activated carbon is used as the electrode material. When the contents of potassium element and iron element are small, the contents of other metal elements also tend to be small.

### [Hydrogen element]

The content of hydrogen element in the activated carbon according to the present invention is 0.25% by mass or less, preferably 0.15% by mass or less, more preferably 0.14% by mass or less. When the content of hydrogen element in the activated carbon is equal to or lower than the above-mentioned upper limit, the reactivity of the activated carbon with an electrolyte is reduced and therefore the activated carbon becomes stable. The lower limit of the content of hydrogen element in the activated carbon is generally 0.05% by mass or more.

### [Oxygen element]

The content of oxygen element in the activated carbon according to the present invention is 1.5% by mass or less, preferably 1.4% by mass or less, more preferably 1.3% by mass or less. When the content of oxygen element in the activated carbon is equal to or lower than the above-mentioned upper limit, the reactivity of the activated carbon with an electrolyte is reduced and therefore the activated carbon becomes stable. The lower limit of the oxygen element in the activated carbon is generally 0.1% by mass or more.

The activated carbon according to the present invention has very low electric resistance, and therefore can be used suitably as an electrode material for various battery devices, a material for electrostatic removal use, a conductive material and the like. For example, the activated carbon is especially suitable as an electrode material for electric double-layer capacitors. When the activated carbon according to the present invention is used as the electrode material, it becomes possible to manufacture an electric double-layer capacitor which can maintain the electrostatic capacitance and energy density thereof at high levels for a long period.

The activated carbon according to the present invention can be produced by, for example, a method comprising:
(1) a step of attaching an alkali metal hydroxide onto plant-derived activated carbon having an average particle diameter of 100 to 10000 µm and a specific surface area of 900 to 2000 m²/g as measured by a BET method (hereinafter, also referred to as an "alkali metal hydroxide-attaching step") ; and
(2) a gas-phase demineralizing step of heat-treating the alkali metal hydroxide-attached activated carbon produced in the precedent step at 500 to 1250°C in an inert gas atmosphere containing a halogen compound (hereinafter, also referred to as a "gas-phase demineralizing step"). According to the production method of the present invention, a low-resistance activated carbon can be produced safely, economically advantageously and easily. The production method may additionally comprise:
   (i) a pulverization step of pulverizing the activated carbon or a carbonaceous material in order to control the average particle diameter of the finally produced activated carbon ; and/or
   (ii) an activation step of activating the carbonaceous material that serves as a raw material to obtain activated carbon.

The activated carbon according to the present invention is plant-derived, and can be produced using a plant-derived carbonaceous precursor (hereinafter, also referred to as a "plant-derived char") as a main raw material. In the present invention, the activated carbon is plant-derived. Therefore, even when an alkali metal hydroxide is attached to the raw material and then the resultant product is heat-treated under an inert gas containing a halogen compound, a large specific surface area can be maintained without causing the shrinkage of the structure thereof. Furthermore, the plant-derived activated carbon is advantageous compared with mineral-derived carbonaceous materials, synthetic material-derived carbonaceous materials and the like from the viewpoints of the reduction in harmful impurities and the conservation of the environment, a commercial viewpoint and the like.

In the present invention, the plant that can be used as a raw material for the plant-derived char (carbonaceous precursor) is not particularly limited, and examples of the plant include coconut shell, coffee beans, tea leaves, sugar cane, fruits (orange, or banana), straws, a broad-leaved tree, a needle-leaved tree, bamboo and rice hull. These plants may be used alone, or two or more of them may be used in combination. The use of coconut shell as the raw material plant is advantageous from a commercial viewpoint, because coconut shell is available in a large quantity.

The type of the palm that can be used as a raw material for the coconut shell is not particularly limited, and examples of the palm include oil palm, coconut palm, salak and double coconut palm. Coconut shells obtained from these palm plants may be used alone, or two or more of them may be used in combination. Among these coconut shells, a coconut palm-derived coconut shell or an oil palm-derived coconut shell, which is a biomass waste produced in a large quantity from coconut palm or oil palm that is used as a food, a detergent raw material, a biodiesel oil raw material and the like is especially preferred, because this coconut shell is readily available and is inexpensive.

In the present invention, each of these plants is available in the form of a char (e.g., a coconut shell char) which is produced by temporarily calcining each of the plants, and it is preferred to use the char as a crude raw material. The term "char" generally refers to a powdery solid material which is produced in a non-molten and unsoftened form by heating a coal and is rich in a carbon content. In the present invention, the term "char" also refers to a powdery solid material which is produced in a non-molted and unsoftened form by heating an organic material and is rich in a carbon content. The method for producing the char from a plant is not particularly limited, and the char can be produced by any method known in the art. For example, a plant that serves as a raw material is heat-treated (carbonized), for example, at a temperature of 300°C or higher for about 1 to 20 hours under an inert gas atmosphere.

### [Activation step]

The plant-derived activated carbon to be used in the present invention can be produced by, for example, carrying out an activation treatment of the carbonaceous precursor (plant-derived char). The activation treatment is a treatment for forming pores in the surface of the carbonaceous precursor to convert the carbonaceous precursor to a porous carbonaceous substance, and makes it possible to produce activated carbon having a large specific surface area and a large pore volume (hereinafter, the activation-treated carbonaceous precursor is also referred to as "raw material activated carbon"). In the case where the carbonaceous precursor is used without being subjected to the activation treatment, the specific surface area or the pore volume is insufficient and it is difficult to secure a satisfactorily high initial capacitance when the activated carbon is used as an electrode material. The activation treatment can be carried out by a method common in the art, and there are mainly two types of treatment methods, i.e., a gas activation treatment and a chemical activation treatment.

As one example of the gas activation treatment, a method is known, in which the carbonaceous precursor is heated in the presence of, for example, water vapor, carbon dioxide, air, oxygen, a combustion gas or a mixed gas thereof. As one example of the chemical activation treatment, a method is known, in which an activator, e.g., zinc chloride, calcium chloride, phosphoric acid, sulfuric acid, sodium hydroxide, potassium hydroxide, magnesium hydroxide and calcium hydroxide, is mixed with the carbonaceous precursor and then the resultant mixture is heated under an inert gas atmosphere. In the present invention, it is preferred to employ a gas activation treatment, since the specific surface area of the resultant raw material activated carbon can be increased and the pore volume can be controlled easily.

In the gas activation treatment, it is preferred to use a combustion gas as an activator gas agent. When a combustion gas is used as an activator gas agent, a raw material activated carbon having a large specific surface area can be produced easily. In particular, in the plant-derived carbonaceous precursor, the pore volume can be controlled easily. In the present invention, when plant-derived raw material activated carbon that is activation-treated with a combustion gas is used, it becomes possible to produce an activated carbon having a larger specific surface area and a larger pore volume more easily compared with a case where another carbonaceous precursor is used or a case where raw material activated carbon produced by another activation treatment (particularly chemical activation treatment) is used. In addition, raw material activated carbon produced by gas activation contains a large amount of amorphous carbon and can be oxidized easily even during being cooled. As a result, in activated carbon produced by a gas activation treatment, easily-degradable acidic functional groups can be produced in a larger amount. Therefore, such an advantageous effect of the present invention that an activated carbon that can be used suitably as an electrode material capable of maintaining the statistic capacitance and the energy density thereof at high levels can be achieved more significantly by reducing the amount of the acidic functional groups in the activated carbon. In the present invention, it is more preferred to use plant-derived activated raw material carbon produced by an activation treatment with a combustion gas.

In the present invention, the BET specific surface area of the raw material activated carbon is preferably 900 m²/g or more, more preferably 1200 m²/g or more, still more preferably 1300 m²/g or more, especially preferably 1400 m²/g or more. The BET specific surface area is also preferably 2000 m²/g or less, more preferably 1800 m²/g or less, still more preferably 1700 m²/g or less. When the BET specific surface area of the raw material activated carbon falls within the above-mentioned range, it becomes possible to achieve a capacitance sufficient for use in electric double-layer capacitors.

The pore volume of the raw material activated carbon is preferably 0.1 mL/g or more, more preferably 0.4 mL/g or more, still more preferably 1 mL/g or more. The pore volume is also preferably 3 mL/g or less, more preferably 2.5 mL/g or less, still more preferably 2 mL/g or less. When the pore volume of the raw material activated carbon falls within the above-mentioned range, it becomes possible to achieve a capacitance sufficient for use in electric double-layer capacitors.

In the present invention, the pore volume can be calculated by a nitrogen adsorption method, and can be calculated by, for example, a method mentioned in the section "EXAMPLES".

The specific surface area or the pore volume of the raw material activated carbon can be controlled by varying the method to be employed for the activation treatment of the carbonaceous precursor or the conditions for the method. For example, when the raw material activated carbon is produced by a gas activation treatment, the specific surface area or the pore volume can be controlled by varying the type of the gas to be used, the heating temperature or the heating time to be employed or the like. In a gas activation treatment, the specific surface area or the average pore diameter of the obtained raw material activated carbon tends to become smaller with the decrease in the heating temperature and become larger with the increase in the heating temperature. In the present invention, when the raw material activated carbon is produced by a gas activation treatment, the heating temperature may vary depending on the type of the gas to be used, and is, for example, about 500 to 1000°C, preferably 500 to 900°C. The heating time is about 0.1 to 10 hours, preferably 1 to 7 hours.

In the present invention, the average particle diameter of the raw material activated carbon is preferably 100 µm or more, more preferably 200 µm or more, still more preferably 300 µm or more. The upper limit of the average particle diameter of the activated carbon is 10000 µm or less, more preferably 8000 µm or less, still more preferably 5000 µm or less. When the average particle diameter of the raw material activated carbon falls within the above-mentioned range, the diffusion of the alkali metal hydroxide into the particles proceeds uniformly during the attachment of the alkali metal hydroxide. Furthermore, when the raw material activated carbon is treated under an inert gas containing a halogen compound, the scattering of the raw material activated carbon which is caused as the result of entrainment can be prevented.

In the present invention, the average particle diameter can be measured by, for example, a laser scattering method.

### [Alkali metal hydroxide-attaching step]

In the method for producing the activated carbon according to the present invention, the alkali metal hydroxide-attaching step is a step of adding and mixing an alkali metal hydroxide to and with plant-derived activated carbon that serves as a raw material. By attaching the alkali metal hydroxide, the decrease in the specific surface area can be prevented in a heat treatment in the below-mentioned gas-phase demineralizing step or a heat treatment step subsequent to the gas-phase demineralizing step, and the removal of hydrogen and the removal of oxygen functional groups can be accelerated.

Examples of the alkali metal hydroxide that can be used in the alkali metal hydroxide-attaching step include lithium hydroxide, sodium hydroxide, potassium hydroxide and cesium hydroxide. From the viewpoint of economic performance and operation performance, sodium hydroxide and potassium hydroxide are preferred. From the viewpoint of the effect to prevent the reduction in the specific surface area, sodium hydroxide is more preferred. Each of these alkali metal hydroxides may be used in the form of an anhydride or a hydrate. These alkali metal hydroxides may be used alone, or two or more of them may be used in the form of a mixture.

The amount of the alkali metal hydroxide to be used is not particularly limited, and may be adjusted depending on the type of the alkali metal hydroxide to be used, the physical properties or characteristic properties of the raw material activated carbon or the like. In order to achieve the effect more prominently, it is generally preferred to use the alkali metal hydroxide in an amount of 10 to 400% by mass per 100% by mass of the raw material activated carbon. With taking the economic performance or the mechanical strength of the finished activated carbon into consideration, the alkali metal hydroxide is more preferably used in an amount of 15 to 200% by mass, still more preferably 20 to 100% by mass, per 100% by mass of the raw material activated carbon.

The method for attaching the alkali metal hydroxide is not particularly limited. For example, a method may be used, in which raw material activated carbon is added to and immersed in a mixture prepared by dissolving the alkali metal hydroxide in water or an alcohol such as methanol and ethanol and then the solvent is removed from the resultant product. The treatment temperature and the treatment time in the attaching step are not particularly limited, and may be adjusted appropriately depending on the type of the alkali metal hydroxide and/or solvent to be used, the concentration of the solution or the like. For example, in the case where the treatment temperature is too low, the viscosity of a mixture of the alkali metal hydroxide with raw material activated carbon tends to increase, and therefore the diffusion of the alkali metal hydroxide becomes insufficient. As a result, the effect to prevent the decrease in the specific surface area or the effect to accelerate the removal of hydrogen or the removal of an oxygen functional group may not be achieved satisfactorily. In the case where the treatment time is too short, the diffusion of the alkali metal hydroxide becomes insufficient and as a result, the effect to prevent the decrease in the specific surface area or the effect to accelerate the removal of hydrogen or the removal of an oxygen functional group may not be achieved satisfactorily. In one embodiment of the present invention, the treatment temperature in the attaching step is generally 10°C or higher, preferably about 15 to 80°C, and the treatment time is generally about 10 to 180 minutes in the attaching step.

A method may also be used, in which the alkali metal hydroxide is mixed with raw material activated carbon in solid states and then the resultant mixture is heated to about 300°C to cause the alkali metal hydroxide to deliquesce and allow to adsorb onto the raw material activated carbon. The activated carbon to which the alkali metal hydroxide has been attached (hereinafter, also referred to as "alkali metal hydroxide-attached activated carbon") obtained by such the methods can also be used directly in the below-mentioned gas-phase demineralizing step.

### [Gas-phase demineralizing step]

The plant-derived activated carbon can be doped with a large quantity of active material, and is therefore useful as an electrode material for electric double-layer capacitors. However, a plant-derived char contains a large quantity of metal elements, particularly potassium (e.g., about 0.3% in coconut shell char) and iron (e.g., about 0.1% of iron element in coconut shell char). When an activated carbon obtained from the plant-derived char containing metal elements such as potassium and iron in large quantities is used as a carbon electrode material, the activated carbon may adversely affect the electrochemical properties and safety of the carbon electrode material. Therefore, it is preferred to reduce the contents of potassium element and iron element in the activated carbon as much as possible.

A plant-derived char also contains elements other than potassium element and iron element, such as an alkali metal (e.g., sodium), an alkaline earth metal (e.g., magnesium, calcium), a transition metal (e.g., copper) and the other elements, and it is also preferred to reduce the contents of these metal elements. This is because, if these metal elements are contained, impurities may be dissolved in an electrolytic solution during the application of a voltage to an electrode and consequently battery performance and safety are highly likely to be adversely affected.

In the present invention, the gas-phase demineralizing step comprises heat-treating the alkali metal hydroxide-attached activated carbon obtained in the alkali metal hydroxide-attaching step at 500 to 1250°C in an atmosphere of an inert gas containing a halogen compound. By carrying out the gas-phase demineralization, sodium element, potassium element, iron element and others can be removed efficiently, and particularly iron element can be removed more efficiently compared with a case of a liquid-phase demineralization. It is also possible to remove other alkali metals, alkaline earth metals and transition metals such as copper and nickel.

The halogen compound to be contained in the inert gas used in the gas-phase demineralizing step is not particularly limited, and examples of the halogen compound include compounds each containing fluorine, chlorine and/or iodine. Specific examples of the halogen compound include fluorine, chlorine, bromine, iodine, hydrogen fluoride, hydrogen chloride, hydrogen bromide, iodine bromide, chlorine fluoride (ClF), iodine chloride (ICl), iodine bromide (IBr), bromine chloride (BrCl), a compound capable of generating each of these halogen compounds upon a heat treatment, or a mixture thereof. These halogen compounds may be used alone, or two or more of them may be used in the form of a mixture. From the viewpoint of the availability and stability, the halogen compound is preferably hydrogen chloride or hydrogen bromide, more preferably hydrogen chloride.

It is preferred that the halogen compound is mixed with an inert gas upon use. The inert gas to be mixed is not particularly limited, as long as the inert gas cannot react with the activated carbon at the treatment temperature. Examples of the inert gas include nitrogen, helium, argon, krypton or a mixed gas thereof, and nitrogen is preferred.

It is preferred that the concentration of an impurity gas, particularly oxygen, contained in the inert gas is as low as possible. The generally acceptable oxygen concentration is preferably 0 to 2000 ppm, more preferably 0 to 1000 ppm.

In the gas-phase demineralizing step, the mixing ratio of the halogen compound with the inert gas is not limited as long as the demineralization can be achieved satisfactorily, and may be adjusted appropriately depending on the type of the halogen compound and/or the inert gas to be used, the condition of the activated carbon to be treated, the treatment amount and the like. From the viewpoint of the corrosion stability of a device to be used and the equilibrium in adsorption of the halogen, the amount of the halogen compound is preferably 0.1 to 10 vol%, more preferably 0.3 to 5 vol%, still more preferably 0.5 to 3 vol%, per the amount of the inert gas. In a liquid-phase demineralization in which the treatment is carried out with a hydrochloric acid solution or the like, a sufficient drying treatment is needed. In contrast, the gas-phase demineralization in which the drying treatment can be performed easily or is not needed is employed advantageously from the viewpoint of productivity and from the industrial viewpoint. In the present invention, the gas-phase demineralization treatment is carried out in the atmosphere of an inert gas containing a halogen compound, and is therefore advantageous because hydrogen at a carbon structural end as well as metal elements can be reduced and the active sites for the activated carbon can also be reduced.

The temperature to be employed for the gas-phase demineralization is generally 500 to 1250°C, preferably 550°C or higher, more preferably 600°C or higher, and is preferably 1250°C or lower, more preferably 1200°C or lower. For example, the temperature is preferably 550 to 1250°C, more preferably 600 to 1200°C. If the temperature for the gas-phase demineralization is lower than 500°C, the efficiency of demineralization is reduced and the demineralization may not be achieved sufficiently. The temperature for the gas-phase demineralization of higher than 1250°C is not desirable, because the activation effect of the halogen compound is hardly achieved and the BET specific surface area may be reduced.

The time for the gas-phase demineralization is not particularly limited, and is preferably 5 to 300 minutes, more preferably 10 to 200 minutes, still more preferably 30 to 150 minutes.

The metal elements, particularly sodium, potassium, iron and the like, contained in the activated carbon to be treated can be removed thorough the gas-phase demineralizing step. Therefore, in the activated carbon after the gas-phase demineralizing step, the sodium content is preferably 0.05% by mass or less, more preferably 0.03% by mass or less. The potassium content is preferably 0.05% by mass or less, more preferably 0.03% by mass or less. The iron content is preferably 0.02% by mass or less, more preferably 0.015% by mass or less, further preferably 0.01% by mass or less, still more preferably 0.005% by mass or less. When the sodium content, the potassium content and the iron content are equal to or lower than the above-mentioned upper limits, respectively, the deposition of the metal elements on the surface of a separator or an electrode or the occurrence of short circuit associated with the generation of an electrolyte derived from the metal elements rarely occurs in a non-aqueous secondary battery a or capacitor containing the activated carbon. Therefore, a battery or a capacitor having high safety can be provided using the activated carbon.

The mechanism of efficient removal of sodium, potassium, another alkali metal, another alkaline earth metal or a transition metal through the gas-phase demineralizing step in the present invention is still unclear, but it is considered as follows. A metal such as potassium, contained in a plant-derived char reacts with a halogen compound dispersed in the char to produce a metal halide (e.g., a chloride or a bromide) . The metal halide thus produced is vaporized (dissipated) by heating, leading to the demineralization of potassium and iron. In this mechanism of the diffusion of the halide in the char and the production of a metal halide through the reaction, it is considered that potassium and iron can be removed through the high diffusion of the halide in the gas phase with higher efficiency compared with the case of a liquid-phase demineralization. However, the present invention is not limited to this explanation.

The device to be employed for the gas-phase demineralization is not particularly limited, as long as the heating can be achieved while mixing the alkali metal hydroxide-attached activated carbon with a mixed gas of the inert gas and the halogen compound. For example, a fluidized bed furnace is used to perform an intralayer distribution process in a continuous mode or a batch mode using a fluidized bed or the like. The amount of the mixed gas to be fed (gas flow rate) is not limited either, and is generally 1 mL/min or more, preferably 5 mL/min or more, still more preferably 10 mL/min or more, per 1 g of the alkali metal hydroxide-attached activated carbon.

### [Heat treatment step]

In the present invention, subsequent to the gas-phase demineralizing step in an inert gas atmosphere containing the halogen compound, it is preferred to carry out a heat treatment step of heating the activated carbon in the absence of a halogen compound. As the result of the contact with the halogen compound in the gas-phase demineralization treatment, the obtained activated carbon contains the halogen. Therefore, it is preferred that the heat treatment is carried out in the absence of a halogen compound to remove the halogen contained in the activated carbon. More specifically, the heat treatment in the absence of the halogen compound is carried out by heat-treating generally at 500 to 1250°C in an inert gas atmosphere containing no halogen compound. The temperature for the heat treatment in the absence of the halogen compound is preferably equal to or higher than the temperature employed in the gas-phase demineralizing step. The temperature for the heat treatment step is preferably 500 to 1250°C, more preferably 550 to 1200°C, still more preferably 600 to 1150°C, still further preferably 650 to 1100°C, especially preferably 650 to 1050°C, infinitely preferably 700 to 1000°C. For example, the heat treatment in the absence of the halogen compound can be carried out by carrying out the heat treatment while blocking the feeding of the halogen compound after the heat treatment (gas-phase demineralizing step) in the inert gas atmosphere containing the halogen compound. In this manner, the halogen in the activated carbon can be removed. The time for the heating treatment in the absence of the halogen compound is not particularly limited, and is preferably 5 to 300 minutes, more preferably 10 to 200 minutes, still more preferably 10 to 150 minutes, most preferably 10 to 100 minutes.

### [Pulverization step]

In the present invention, a pulverization treatment may be carried out if necessary, for the purpose of controlling the shape and the particle diameters of the finally obtained activated carbon to desired shape and particle diameters. The pulverization treatment may be applied to any one of the raw material activated carbon, the alkali metal hydroxide-attached activated carbon, and the activated carbon obtained after the gas-phase demineralization treatment and/or after the subsequent heat treatment.

The pulverization machine to be used for the pulverization is not particularly limited. For example, a bead mill, a jet mill, a ball mill, a hummer mill, a rod mill and the like may be used singly or in combination. From the viewpoint of the reduction in the generation of a fine powder, a jet mill equipped with a classification function is preferred. In the case where a ball mill, a hummer mill, a rod mill or the like is used, a fine powder can be removed by carrying out classification after the pulverization.

When the classification is carried out after the pulverization treatment, the average particle diameter can be adjusted more correctly. Examples of the type of the classification include classification with a sieve, wet-mode classification and dry-mode classification. Examples of the wet-mode classifier include classifiers respectively utilizing the principles of gravitational classification, inertial classification, hydraulic classification, centrifugal classification and the like. Examples of the dry-mode classifier include classifiers respectively utilizing the principles of settling classification, mechanical classification and centrifugal classification.

In the pulverization step, both of the pulverization and the classification may also be achieved using a single device. For example, a jet mill equipped with a dry-mode classification function may be used for achieving both of the pulverization and the classification. Alternatively, a device in which a pulverization machine and a classifier are arranged independently on each other may also be used. In this case, the pulverization and the classification may be carried out continuously, or the pulverization and the classification may be carried out discontinuously.

### EXAMPLES

Hereinbelow, the present invention will be described specifically by way of examples. However, these examples are not intended to limit the scope of the present invention.

The methods for measuring the values of physical properties of an activated carbon will be described below. However, the values of the physical properties mentioned in the present specification including the section "EXAMPLES" were determined by the following methods.

### [Measurement of BET specific surface area]

A specific surface area was determined by a BET method for measuring a nitrogen adsorption isothermal line of a sample using a nitrogen adsorption amount measurement device BELSORP-MAX manufactured by MicrotracBel Corporation.

### [Elemental analysis]

An elemental analysis was carried out using an oxygen-nitrogen-hydrogen analysis device EMGA-930 manufactured by HORIBA, Ltd.

The detection method of the device was an oxygen: non-dispersive infrared method (NDIR), a nitrogen: thermal conductivity detection method (TCD) or a hydrogen: non-dispersive infrared method (NDIR). The correction was carried out using an (oxygen-nitrogen) Ni capsule, TiH₂ (H standard sample) and SS-3 (N, O standard sample), 20 mg of a sample, of which the water content had been measured as a pretreatment at 250°C for about 10 minutes, was placed in the Ni capsule, the sample was degassed in an elemental analysis device for 30 seconds, and then the measurement was carried out. In the test, the analysis was carried out for three samples, and an average value was employed as an analysis value.

### [Raman spectra]

Raman spectra were measured using LabRAM ARAMIS manufactured by HORIBA, Ltd. using a light source having a laser wavelength of 532 nm. In the test, particles were randomly sampled from three areas in each sample, and then the measurement was carried out with respect to the two areas. The conditions for the measurement were as follows: the wavelength range was 50 to 2000 cm⁻¹, the integration frequency was 1000 times, and an average value of values measured in six areas in total was calculated as a measurement value. The G band half-value width was measured after subjecting the spectra obtained under the above-mentioned measurement conditions to the peak separation between a D band (around 1360 cm⁻¹) and a G band (around 1590 cm⁻¹) by Gaussian function fitting. The R value was determined as an intensity ratio I_{D}/I_{G} of the intensity of a peak of D band to the intensity of a peak of G band (i.e., a (D band peak intensity)/(G band peak intensity)).

### [Measurement of average particle diameter]

The average particle diameter (particle size distribution) of a sample was measured by a laser scattering method in the following manner. A sample was introduced into an aqueous solution containing 0.3% by mass of a surfactant ("ToritonX100" manufactured by Wako Pure Chemical Industries Ltd.), and then the solution was treated with an ultrasonic cleaner for 10 minutes or longer to disperse the sample in the aqueous solution. The particle size distribution was measured using the resultant liquid dispersion. The measurement of the particle size distribution was carried out using a particle diameter-particle size distribution measurement device ("Microtrac MT3000" manufactured by Nikkiso Co., Ltd.). The D50 value was a particle diameter at which the cumulative volume became 50%, and this value was employed as an average particle diameter.

### [Measurement of contents of metal elements]

The method for measuring the content of sodium element, the content of potassium element and the content of iron element content was carried out in the following manner. A carbon sample containing sodium element, potassium element and iron element respectively in predetermined amounts was prepared, and then a calibration curve relating to the relationship between the intensities of sodium and potassium Kα lines and the contents of sodium element and potassium element and a calibration curve relating to the relationship between the intensity of iron Kα line and the content of iron element were prepared using a fluorescent X-ray analysis device. Subsequently, the sample was subjected to a fluorescent X-ray analysis to measure the intensities of sodium Kα line, potassium Kα line and iron Kα line, and then the sodium element content, the potassium element content and the iron element content were determined from the previously prepared calibration curves.

The fluorescent X-ray analysis was carried out under the following conditions using LAB CENTER XRF-1700 manufactured by Shimadzu Corporation. A top irradiation-type holder was used, and the sample measurement area was set within a circle having a diameter of 20 mm. The placement of a sample to be measured was carried out as follows: 0.5 g of the sample was placed in a polyethylene-made container having an inner diameter of 25 mm, then the back of the sample was pressed with a plankton net, then the measurement surface of the sample was covered with a polypropylene-made film, and then the measurement was carried out. An X-ray source was set at 40 kV and 60 mA. With respect to potassium, LiF (200) was used as an analyzing crystal, a gas flow-type proportional counter tube was used as a detector, and an area in which the 2θ was 90 to 140° was measured at a scanning rate of 8°/min. With respect to iron, LiF (200) was used as an analyzing crystal, a scintillation counter was used as a detector, and an area in which the 2θ was 56 to 60° was measured at a scanning rate of 8°/min.

### [Production Example 1]

### (Preparation of raw material activated carbon)

A coconut-shell-derived carbonaceous precursor having a BET specific surface area of 500 m²/g was activated with water vapor at 900°C for 90 minutes in an activation gas that was prepared by feeding steam to a kerosene combustion gas (a mixed gas at a mixing ratio of H₂O, CO₂, CO, N₂ = 20 : 10 : 1 : 100) so as to adjust the water vapor partial pressure to 35% to prepare coconut-shell-derived raw material activated carbon. The BET specific surface area of the raw material activated carbon was 1500 m²/g.

### [Example 1]

### (Preparation of activated carbon)

An activated carbon was prepared in accordance with the conditions shown in Table 1 in the following manner. The coconut-shell-derived raw material activated carbon produced in Production Example 1 was ground to obtain coconut-shell-derived raw material activated carbon having an average particle diameter of 2.360 to 0.850 mm. An aqueous solution prepared by dissolving 20 g of sodium hydroxide in 100 g of ion-exchanged water was added to 100 g of the ground coconut-shell-derived raw material activated carbon so that the ground coconut-shell-derived raw material activated carbon was immersed in and impregnated with the aqueous solution for 1 hour, and then the resultant product was dried at 80°C using a hot-air dryer for 12 hours. The activated carbon obtained by the drying was treated at a treatment temperature of 870°C for 50 minutes while feeding a nitrogen gas containing 2 vol% of a hydrogen chloride gas at a flow rate of 10 L/min. Subsequently, only the feeding of the hydrogen chloride gas was halted, and the activated carbon was heat-treated at a treatment temperature of 870°C for 50 minutes to obtain an activated carbon. The resultant activated carbon was crudely pulverized with a ball mill so as to have an average particle diameter 8 µm, and the resultant product was pulverized with a compact jet mill (co-jet system α-mkIII) and then classified to obtain an activated carbon (1) having an average particle diameter of 4 µm.

### [Example 2]

The same procedure as in Example 1 was carried out, except that the treatment time in the gas-phase demineralizing step was set to 150 minutes instead of 50 minutes. As a result, an activated carbon (2) having an average particle diameter of 4 µm was prepared.

### [Example 3]

The same procedure as in Example 1 was carried out, except that each of the treatment temperature in the gas-phase demineralizing step and the subsequent heat treatment temperature was set to 1020°C instead of 870°C. As a result, an activated carbon (3) having an average particle diameter of 4 µm was prepared.

### [Example 4]

An activated carbon was prepared in accordance with the conditions shown in Table 1 in the following manner. The coconut-shell-derived raw material activated carbon produced in Production Example 1 was ground to obtain coconut-shell-derived raw material activated carbon having an average particle diameter of 2.360 to 0.850 mm. An aqueous solution prepared by dissolving 25 g of sodium hydroxide in 100 g of ion-exchanged water was added to 100 g of the ground coconut-shell-derived raw material activated carbon so that the ground coconut-shell-derived raw material activated carbon was immersed in and impregnated with the aqueous solution for 1 hour, and then the resultant product was dried at 80°C using a hot-air dryer for 12 hours. The activated carbon obtained by the drying was treated at a treatment temperature of 870°C for 100 minutes while feeding a nitrogen gas containing 2 vol% of a hydrogen chloride gas at a flow rate of 10 L/min. Subsequently, only the feeding of the hydrogen chloride gas was halted, and the activated carbon was heat-treated at a treatment temperature of 870°C for 50 minutes to obtain an activated carbon. The resultant activated carbon was crudely pulverized with a ball mill so as to have an average particle diameter 8 µm, and the resultant product was pulverized with a compact jet mill (co-jet system α-mkIII) and then classified to obtain an activated carbon (4) having an average particle diameter of 3.8 µm.

### [Example 5]

An activated carbon was prepared in accordance with the conditions shown in Table 1 in the following manner. The coconut-shell-derived raw material activated carbon produced in Production Example 1 was ground to obtain coconut-shell-derived raw material activated carbon having an average particle diameter of 2.360 to 0.850 mm. An aqueous solution prepared by dissolving 40 g of sodium hydroxide in 100 g of ion-exchanged water was added to 100 g of the ground coconut-shell-derived raw material activated carbon so that the ground coconut-shell-derived raw material activated carbon was immersed in and impregnated with the aqueous solution for 1 hour, and then the resultant product was dried at 80°C using a hot-air dryer for 12 hours. The activated carbon obtained by the drying was treated at a treatment temperature of 870°C for 100 minutes while feeding a nitrogen gas containing 2 vol% of a hydrogen chloride gas at a flow rate of 10 L/min. Subsequently, only the feeding of the hydrogen chloride gas was halted, and the activated carbon was heat-treated at a treatment temperature of 870°C for 50 minutes to obtain an activated carbon. The resultant activated carbon was crudely pulverized with a ball mill so as to have an average particle diameter 8 µm, and the resultant product was pulverized with a compact jet mill (co-jet system α-mkIII) and then classified to obtain an activated carbon (5) having an average particle diameter of 3.5 µm.

### [Comparative Example 1]

The same procedure as in Example 1 was carried out, except that a nitrogen gas that did not contain a hydrogen chloride gas was used in place of the nitrogen gas containing a 2-vol% hydrogen chloride gas. As a result, an activated carbon (6) having an average particle diameter of 4 µm was prepared.

### [Comparative Example 2]

The same procedure as in Example 3 was carried out, except that a nitrogen gas that did not contain a hydrogen chloride gas was used in place of the nitrogen gas containing a 2-vol% hydrogen chloride gas. As a result, an activated carbon (7) having an average particle diameter of 4 µm was prepared.

### [Comparative Example 3]

The same procedure as in Example 1 was carried out, except that sodium hydroxide was not attached. As a result, an activated carbon (8) having an average particle diameter of 4 µm was prepared.

**[Table 1]**

| | | Gas-phase demineralizing step | | | | Heat treatment step | | |
|---|---|---|---|---|---|---|---|---|
| | | Hydrogen chloride gas | Nitrogen gas | Temperature | Treatment time | Nitrogen gas | Temperature | Treatment time |
| | | [vol%] | [vol%] | [°C] | [min] | [vol%] | [°C] | [min] |
| Example | 1 | 2 | 98 | 870 | 50 | 100 | 870 | 50 |
| | 2 | 2 | 98 | 870 | 150 | 100 | 870 | 50 |
| | 3 | 2 | 98 | 1020 | 50 | 100 | 1020 | 50 |
| | 4 | 2 | 98 | 870 | 100 | 100 | 870 | 50 |
| | 5 | 2 | 98 | 870 | 100 | 100 | 870 | 50 |
| Comparative Example | 1 | - | 100 | 870 | 50 | 100 | 870 | 50 |
| | 2 | - | 100 | 1020 | 50 | 100 | 1020 | 50 |
| | 3 | 2 | 98 | 870 | 50 | 100 | 870 | 50 |

### <Analysis of activated carbons>

Next, each of the activated carbons (1) to (8) was used as a sample, and the hydrogen element content, the oxygen element content, the metal element (sodium element, potassium element, iron element) content, the BET specific surface area and the R value of the sample were measured. The results are shown in Table 2.

**[Table 2]**

| | | Hydrogen element content [mass%] | Oxygen element content [mass%] | Na element content [ppm] | K element content [ppm] | Fe element content [ppm] | BET specific surface area [m²/g] | Raman spectrum |
|---|---|---|---|---|---|---|---|---|
| | | | | | | | | R value [I_{D}/I_{G}] |
| Example | 1 | 0.117 | 1.053 | 113 | 164 | 48 | 1690 | 1.21 |
| | 2 | 0.143 | 1.462 | 31 | 100 | 67 | 1610 | 1.27 |
| | 3 | 0.097 | 0.866 | 73 | 285 | 25 | 1600 | 1.30 |
| | 4 | 0.098 | 0.912 | 132 | 166 | 44 | 1660 | 1.22 |
| | 5 | 0.096 | 0.856 | 211 | 244 | 42 | 1620 | 1.28 |
| Comparative Example | 1 | 0.471 | 1.889 | 404 | 13500 | 90 | 1310 | 1.13 |
| | 2 | 0.473 | 1.697 | 204 | 13000 | 90 | 1280 | 1.25 |
| | 3 | 0.462 | 1.256 | 0 | 171 | 30 | 1690 | 1.19 |

### [Production of films each containing carbon material]

Each of the activated carbons (1) to (8) produced in Examples 1 to 5 and Comparative Examples 1 to 3 was mixed with a styrene butadiene rubber (SBR) manufactured by JSR Corporation and carboxy methyl cellulose (CMC) manufactured by DSK Co., Ltd in water so that the (electrode material) : SBR : CMC became 90 : 3 : 2 (by mass), thereby producing a slurry. The resultant slurry was applied onto a white glass slide with a bar coater, and then the resultant product was dried with hot air at 80°C and then dried with a glass tube oven under a pressure-reduced atmosphere at 150°C for 7 hours. In this manner, carbon-material-containing films (1) to (8) were obtained. The thickness of each of the carbon-material-containing films (1) to (8) was 100 µm.

The sheet resistance of each of the carbon-material-containing films (1) to (8) was measured using Loresta-GP (manufactured by Mitsubishi Chemical Analytech Co., Ltd.).

### <Analysis and results of tests>

The results of the sheet resistance measurement of the carbon-material-containing films (1) to (8) are shown in Table 3.

**[Table 3]**

| | | Sheet resistance |
|---|---|---|
| | | (Ω/□) |
| Example | 1 | 172 |
| | 2 | 166 |
| | 3 | 142 |
| | 4 | 169 |
| | 5 | 133 |
| Comparative Example | 1 | 900 |
| | 2 | 880 |
| | 3 | 570 |

As shown in Table 3, when the activated carbons (1) to (5) produced in Examples 1 to 5 were used, the sheet resistance values were greatly reduced and the improvement in electrical conductivity was observed compared with the cases where the activated carbons (6) to (8) produced in Comparative Examples 1 to 3 were used.

## Claims

1. An activated carbon which is derived from a plant, the activated carbon having a specific surface area of 1000 to 1800 m²/g as measured by a BET method, **characterized in that** the activated carbon has a hydrogen element content measured in accordance with the method described in the description of 0.25% by mass or less and an oxygen element content measured in accordance with the method described in the description of 1.5% by mass or less.

2. The activated carbon according to claim 1, wherein a potassium element content measured in accordance with the method described in the description is 500 ppm or less.

3. The activated carbon according to claim 1 or 2, wherein an iron element content measured in accordance with the method described in the description is 200 ppm or less.

4. A method for producing an activated carbon according to any one of claims 1 to 3, comprising:
a step of attaching an alkali metal hydroxide onto plant-derived activated carbon having an average particle diameter measured in accordance with the method described in the description of 100 to 10000 µm and a specific surface area of 900 to 2000 m²/g as measured by a BET method; and
a gas-phase demineralizing step of heat-treating alkali-metal-hydroxide-attached activated carbon produced in the precedent step at 500 to 1250°C in an inert gas atmosphere containing a halogen compound to obtain the activated carbon.

## Patentansprüche

1. Aktivkohle, die aus einer Pflanze gewonnen ist, wobei die Aktivkohle eine spezifische Oberfläche von 1000 bis 1800 m²/g, gemessen nach einer BET-Methode, aufweist, **dadurch gekennzeichnet, dass** die Aktivkohle einen Wasserstoffgehalt, gemessen nach der in der Beschreibung beschriebenen Methode, von 0,25 Masseprozent oder weniger und einen Sauerstoffgehalt, gemessen nach der in der Beschreibung beschriebenen Methode, von 1,5 Masseprozent oder weniger aufweist.

2. Aktivkohle nach Anspruch 1, wobei ein Kaliumgehalt, gemessen nach dem in der Beschreibung beschriebenen Verfahren, 500 ppm oder weniger beträgt.

3. Aktivkohle nach Anspruch 1 oder 2, wobei ein Eisengehalt, gemessen nach dem in der Beschreibung beschriebenen Verfahren, 200 ppm oder weniger beträgt.

4. Verfahren zur Herstellung einer Aktivkohle nach einem der Ansprüche 1 bis 3, umfassend:
einen Schritt der Anbindung eines Alkalimetallhydroxids an pflanzliche Aktivkohle mit einem mittleren Teilchendurchmesser, gemessen nach dem in der Beschreibung beschriebenen Verfahren, von 100 bis 10000 µm und einer spezifischen Oberfläche von 900 bis 2000 m²/g, gemessen nach einer BET-Methode; und
einen Gasphasen-Demineralisierungsschritt der Wärmebehandlung von in dem vorhergehenden Schritt hergestellter, mit Alkalimetallhydroxid gebundener Aktivkohle bei 500 bis 1250°C in einer Inertgasatmosphäre, die eine Halogenverbindung enthält, um die Aktivkohle zu erhalten.

## Revendications

1. Charbon actif qui est dérivé d'une plante, le charbon actif ayant une surface spécifique de 1000 à 1800 m²/g telle que mesurée par un procédé BET,
**caractérisé en ce que** le charbon actif a une teneur en élément hydrogène mesurée conformément au procédé décrit dans la description de 0,25 % en masse ou moins et une teneur en élément oxygène mesurée conformément au procédé décrit dans la description de 1,5 % en masse ou moins.

2. Charbon actif selon la revendication 1, dans lequel une teneur en élément potassium mesurée conformément au procédé décrit dans la description est de 500 ppm ou moins.

3. Charbon actif selon la revendication 1 ou 2, dans lequel une teneur en élément fer mesurée conformément au procédé décrit dans la description est de 200 ppm ou moins.

4. Procédé de production d'un charbon actif selon l'une quelconque des revendications 1 à 3, comprenant :
une étape de liaison d'un hydroxyde de métal alcalin sur du charbon actif dérivé de plante ayant un diamètre particulaire moyen mesuré conformément au procédé décrit dans la description de 100 à 10 000 µm et une surface spécifique de 900 à 2000 m²/g telle que mesurée par un procédé BET ; et
une étape de déminéralisation en phase gazeuse consistant à traiter thermiquement du charbon actif relié à un hydroxyde de métal alcalin produit dans l'étape précédente à une température de 500 à 1250°C dans une atmosphère de gaz inerte contenant un composé d'halogène pour obtenir le charbon actif.
